# EUROPÄISCHE PATENTANMELDUNG

(11) **EP 1 439 338 A2**
(43) Veröffentlichungstag der Anmeldung: **21.07.2004**
(21) Anmeldenummer: 03022349.9
(22) Anmeldetag: 04.10.2003
(51) Int. Cl.: F16J 15/56

(54) **Dichtungsanordnung**

(30) Priorität: 16.01.2003 DE 10301345
(71) Anmelder: Carl Freudenberg KG, 69469 Weinheim (DE)
(72) Erfinder: Freitag, Edgar, Dr., 34613 Schwalmstadt (DE)

(57) **Zusammenfassung**

Dichtungsanordnung zur Abdichtung von zwei translatorisch zueinander bewegbaren Maschinenelementen (1, 2), umfassend eine Dichtung (3), die in einer Nut (4) des ersten Maschinenelements (1, 2) angeordnet ist, wobei die Nut (4) radial in Richtung des zweiten Maschinenelements (2, 1) offen ist, wobei die Dichtung (3) unter elastischer radialer und elastischer axialer Vorspannung innerhalb der Nut (4) angeordnet ist und ein Dichtelement (5) umfaßt, das, in Längsschnitt betrachtet, im Wesentlichen trapezförmig ausgebildet ist, mit zwei Flankenflächen (6, 7) und einer Dichtfläche (8), wobei die Dichtfläche (8) die abzudichtende Fläche (9) des zweiten Maschinenelements (2, 1) unter elastischer radialer Vorspannung dichtend berührt, sowie zwei Anpreßelemente (10, 11), die jeweils eine der Flankenflächen (6, 7), den Nutgrund (12) der Nut (4) und die der jeweiligen Flankenfläche (6, 7) zugewandte Begrenzungswand (13, 14) der Nut (4) anliegend berühren, wobei die Dichtfläche (8) eine axiale Länge (15) aufweist, die geringer ist als die axiale Länge (16) der Nut (4).

## Beschreibung

Die Erfindung betrifft eine Dichtungsanordnung zur Abdichtung von zwei translatorisch zueinander bewegbaren Maschinenelementen.

### Stand der Technik

Solche Dichtungsanordnungen sind allgemein bekannt und umfassen z. B. eine Dichtung, die in einer Nut eines Maschinenelements angeordnet ist, wobei die Nut radial in Richtung des anderen Maschinenelements offen ist. Die Dichtung ist beispielsweise zweiteilig ausgebildet und umfaßt ein Dichtelement, das die abzudichtende Fläche anliegend berührt und durch ein Anpreßelement, beispielsweise einen O-Ring, unter elastischer radialer Vorspannung innerhalb der Nut angeordnet ist. Die gesamte Dichtung ist den stirnseitigen Begrenzungswänden der Nut jeweils mit axialem Abstand benachbart zugeordnet, verschiebt sich während der bestimmungsgemäßen Verwendung innerhalb der Nut axial in Richtung des Raums mit relativ niedrigerem Druck, bis sie die entsprechende Begrenzungswand der Nut anliegend berührt.
Diese freie axiale Beweglichkeit zwischen den Begrenzungswänden der Nut ist jedoch in einigen Anwendungen, insbesondere bei schlagartiger wechselnder Beaufschlagung der Dichtung mit Druckimpulsen, nachteilig. Durch die freie axiale Beweglichkeit der Dichtung innerhalb der Nut entstehen freie Schwingungen, zum Beispiel Stick-Slip-Effekte und das Anschlagen der Dichtung an eine der Begrenzungswände, die sich auf die gegeneinander abzudichtenden Maschinenelemente übertragen.

### Darstellung der Erfindung

Der Erfindung liegt die Aufgabe zugrunde, eine Dichtungsanordnung der eingangs genannten Art derart weiterzuentwickeln, dass eine axiale Übertragung von Schwingungen von der Dichtungsanordnung auf die gegeneinander abzudichtenden Maschinenelemente minimiert bzw. gedämpft wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Dichtungsanordnung zur Abdichtung von zwei translatorisch zueinander bewegbaren Maschinenelementen vorgesehen, umfassend eine Dichtung, die in einer Nut des ersten Maschinenelements angeordnet ist, wobei die Nut radial in Richtung des zweiten Maschinenelements offen ist, wobei die Dichtung unter elastischer radialer und elastischer axialer Vorspannung innerhalb der Nut angeordnet ist und ein Dichtelement umfaßt, das, im Längsschnitt betrachtet, im Wesentlichen trapezförmig ausgebildet ist, mit zwei Flankenflächen und einer Dichtfläche, wobei die Dichtfläche die abzudichtende Fläche des zweiten Maschinenelements unter elastischer radialer Vorspannung dichtend berührt, sowie zwei Anpreßelemente, die jeweils eine der Flankenflächen, den Nutgrund der Nut und die der jeweiligen Flankenfläche zugewandte Begrenzungswand der Nut anliegend berühren, wobei die Dichtfläche eine axiale Länge aufweist, die geringer ist als die axiale Länge der Nut.
Die Dichtung ist in radialer und axialer Richtung vorgespannt innerhalb ihres Einbauraums angeordnet. Im Gegensatz zur Dichtungsanordnung, die eingangs beschrieben ist, ist die Dichtung der erfindungsgemäßen Dichtungsanordnung in axialer Richtung nicht frei beweglich zwischen den Begrenzungswänden der Nut angeordnet. Schwingungen, die durch eine freie axiale Beweglichkeit auf die gegeneinander abzudichtenden Maschinenelemente übertragen werden könnten, werden durch die erfindungsgemäße Dichtungsanordnung wesentlich minimiert.

Durch die trapezförmige Gestalt des Dichtelements, das sich mit seinen beiden Flankenflächen jeweils an der Anpreßfläche eines der Anpreßelemente abstützt, zentriert sich das Dichtelement, in axialer Richtung betrachtet, selbsttätig innerhalb des Einbauraums. Herstellungsbedingt oder im nicht-Differenzdruck beaufschlagten Zustand der Dichtungsanordnung, ist das Dichtelement den Begrenzungswänden der Nut jeweils mit axialem Abstand benachbart zugeordnet; eine Berührung findet nicht statt.

### Zur Funktion der Dichtungsanordnung wird folgendes ausgeführt:

Im nicht-Differenzdruck beaufschlagten Zustand der Dichtungsanordnung ist die Dichtung, umfassend das Dichtelement und die beiden Anpreßelemente, axial und radial vorgespannt innerhalb ihres Einbauraums angeordnet. Die Anpreßelemente sorgen in Verbindung mit der, im Längsschnitt betrachtet, im Wesentlichen trapezförmigen Gestalt des Dichtelements für dessen selbsttätige axial mittige Zentrierung innerhalb des Einbauraums.

Entstehen in einem der durch die Dichtungsanordnung gegeneinander abgedichteten Räume Druckschwankungen, so dass die Dichtung beispielsweise durch schlagartig auftretende Druckimpulse in Richtung des Raums mit vergleichsweise geringerem Druck belastet wird, bewegt sich das Dichtelement, soweit es die Elastizität des Dichtelements und der Anpreßelemente zuläßt, mit seiner Flankenfläche relativ auf der Anpreßfläche des Anpreßelements, das dem Raum mit vergleichsweise niedrigerem Druck zugewandt ist, axial in die entsprechende Richtung. Durch die Keilwirkung zwischen dem trapezförmigen Dichtelement und dem Anpreßelement erhöht sich mit zunehmendem axialen Weg die Anpreßkraft zwischen Dichtelement und Anpreßelement. Durch den Anstieg der Anpreßkraft und dadurch, dass während der bestimmungsgemäßen Verwendung der Dichtungsanordnung ein Anschlagen der Bestandteile der Dichtung an die Begrenzungswände der Nut vermieden wird, werden Schwingungen der Dichtung stark gedämpft und dadurch minimiert.

Die elastische Verformbarkeit/Relativbeweglichkeit des Dichtelements, bezogen auf die Anpreßelemente ist bevorzugt stets so gering, dass auch die dem höheren Druck zugewandte Flankenfläche des Dichtelements stets unter elastischer Vorspannung an der entsprechenden Anpreßfläche des Anpreßelements anliegt, das dem Raum mit vergleichsweise höherem Druck zugewandt ist. Dadurch ergibt sich eine Abdichtung entlang beider Flankenflächen des Dichtelements und somit insgesamt ein gutes Abdichtungsergebnis der gegeneinander abzudichtenden Räume.

Durch die axiale Vorspannung der Dichtung innerhalb ihres Einbauraums und durch die trapezförmige Gestalt des Dichtelements ist außerdem von Vorteil, dass durch Stick-Slip-Effekte angeregte Schwingungen auf ein Minimum gedämpft werden.

Das Dichtelement kann aus einem polymeren Werkstoff bestehen. Bevorzugt gelangt PTFE zur Anwendung. Ein solcher Werkstoff ist hoch belastbar und gegenüber den meisten abzudichtenden Medien beständig. Die Dichtungsanordnung weist daher gleichbleibend gute Gebrauchseigenschaften während einer sehr langen Gebrauchsdauer auf. Nach einem vernachlässigbar geringen Anfangsverschleiß verfestigt sich die Dichtfläche des Dichtelements und wird dadurch sehr widerstandsfähig. Außerdem weist PTFE einen niedrigen Reibungskoeffizient auf, so dass sich eine reibungsarme und nur mit geringem Verschleiß behaftete Relativbewegung zwischen dem Dichtelement, dem zweiten Maschinenelement und den beiden Anpreßelementen ergibt.
Die schwingungsdämpfenden Eigenschaften der Dichtungsanordnung sind nicht primär auf hohe Reibung zwischen den relativ zueinander beweglichen Bauteilen zurückzuführen sondern auf die Keilwirkung des im Längsschnitt betrachtet trazepförmigen Dichtelements gegenüber dem jeweiligen Anpreßelement bei axialer Druckbeaufschlagung.

Die Anpreßelemente bestehen bevorzugt aus einem inkompressiblen gummielastischen Werkstoff. Werkstoffe, die inkompressibel sind, wie beispielsweise Gummi, sind für eine gute Funktion der Dichtungsanordnung von entscheidender Wichtigkeit. Würden die Anpreßelemente demgegenüber aus einem kompressiblen Werkstoff bestehen, beispielsweise aus einem Schaumstoff, würde sich das Volumen des druckbelasteten Anpreßelements bei Druckbeaufschlagung durch das Dichtelement verkleinern; die zur Lösung der Aufgabe notwendige Keilwirkung wäre nicht gegeben und das Dichtelement würde weitgehend ungebremst axial an der Begrenzungswand der Nut anschlagen und unerwünschte Schwingungen verursachen.

Die Anpreßelemente berühren die Flankenflächen mit Anpreßflächen anliegend. Speziell im Hinblick auf eine Minimierung des abrassiven Verschleißes im Bereich der gegenseitigen Berührung, ist ein aus PTFE bestehendes Dichtelement von Vorteil.

Das Dichtelement kann axial beiderseits stirnseitige Anschlagpuffer aufweisen, die der jeweils axial benachbart angrenzenden Begrenzungswand mit axialem Abstand benachbart zugeordnet sind. Die Anschlagpuffer und die jeweils benachbarte Begrenzungswand berühren einander nur zur Begrenzung extremer Auslenkbewegungen des Dichtelements in axialer Richtung. Während der normalen Verwendung der Dichtungsanordnung berühren sich die Anschlagpuffer und die entsprechenden Begrenzungswände demgegenüber nicht.

Das Dichtelement kann, im Längsschnitt betrachtet, zu einer axial mittig in der Nut errichteten gedachten Radialebene symmetrisch ausgebildet sein. Ein solches Dichtelement ist von Vorteil, wenn beide abzudichtenden Räume abwechselnd mit etwa gleich hohem Druck beaufschlagt werden. Die Gebrauchseigenschaften der Dichtungsanordnung sind dadurch gleich, unabhängig davon, ob die Dichtungsanordnung mit Druckimpulsen aus dem einen oder dem anderen abzudichtenden Raum beaufschlagt wird.

Für Fälle, in denen die Druckbeaufschlagung aus den beiden abzudichtenden Räumen unterschiedlich ist, kann ein asymmetrisch gestaltetes Dichtelement vorteilhaft sein.

Die Anpreßelemente können, im Längsschnitt betrachtet, im Wesentlichen dreieckförmig ausgebildet sein. Durch eine solche Ausgestaltung ist die Zentrierung des im Wesentlichen trapezförmig gestalteten Dichtelements innerhalb des Einbauraums im nicht-differenzdruck beaufschlagten Zustand besonders einfach. Innerhalb des Einbauraums zentriert sich das Dichtelement dann selbsttätig.

Die Anpreßelemente sind bevorzugt übereinstimmend ausgebildet und symmetrisch zur Radialebene angeordnet. Die Fertigung und Montage ist dadurch kostengünstig und einfach durchführbar. Die Gefahr von Montagefehlern ist auf ein Minimum reduziert.

Die Anpreßelemente sind einander bevorzugt mit axialem Abstand benachbart zugeordnet, wobei zur besseren Montage in dem durch den Abstand gebildeten Spalt ein sich in radialer Richtung erstreckender Positionierungsvorsprung für die Anpreßelemente angeordnet ist. Die Montage der Dichtungsanordnung wird dadurch vereinfacht, dass die Anpreßelemente innerhalb der Nut in ihrer richtigen Position vormontiert sind

Die Anpreßelemente können O-Ringe oder rotationssymetrische Profilringe sein.

Die Flankenflächen und/oder die Anpreßflächen und/oder die Dichtfläche sind, im Längsschnitt betrachtet, im Wesentlichen ballig ausgebildet. Dadurch wird eine elastische Vorspannung der Dichtung innerhalb des Einbauraums in radialer und axialer Richtung auch während einer sehr langen Gebrauchsdauer gewährleistet. Relaxationserscheinungen des Dichtelements und/oder der Anpreßelemente werden durch die ballige Gestalt ihrer Oberflächen ausgeglichen.

Die Flankenflächen und die entsprechenden Anpreßflächen können mit dem Nutgrund jeweils einen Winkeln zwischen 10 ° und 80 °, bevorzugt 30 ° und 60° einschließen. Die Größe und Anteile der radialen und axialen Vorspannkraft werden durch die Größe des Winkels bestimmt. Je flacher der Winkel umso größer ist die radiale Vorspannung. Je steiler der Winkel, je größer ist die axiale Vorspannung.

Die Winkel können, in Abhängigkeit vom jeweiligen Anwendungsfall, übereinstimmend ausgebildet sein. Eine solche Ausgestaltung ist insbesondere immer dann von Vorteil, wenn die Druckbeaufschlagung des Dichtelements aus den gegeneinander abzudichtenden Räumen abwechselnd im Wesentlichen gleich ist. Außerdem ist die Zentrierung des Dichtelements zwischen den beiden Anpreßelementen dadurch besonders einfach möglich. Für den Fall, dass die Größe der Druckimpulse aus den abzudichtenden Räumen auf das Dichtelement wesentlich voneinander abweichen, kann es sinnvoll sein, die Winkel unterschiedlich auszubilden, wobei der Winkel umso kleiner ist, je schwächer der Druckimpuls ist; der Winkel ist umso größer, je größer der Druckimpuls ist.

### Kurzbeschreibung der Zeichnungen

Ein Ausführungsbeispiel der erfindungsgemäßen Dichtungsanordnung wird nachfolgend anhand der Figuren 1 bis 3 näher erläutert. Diese zeigen jeweils in schematischer Darstellung:
- Fig. 1:: ein Ausführungsbeispiel der erfindungsgemäßen Dichtungsanordnung im nicht-Differenzdruck beaufschlagten Zustand,
- Fig. 2:: das Ausführungsbeispiei aus Figur 1 im Differenzdruck beaufschlagten Zustand und
- Fig. 3:: die Bestandteile der Dichtungsanordnung aus den Figuren 1 und 2 vor ihrer Montage.

### Ausführung der Erfindung

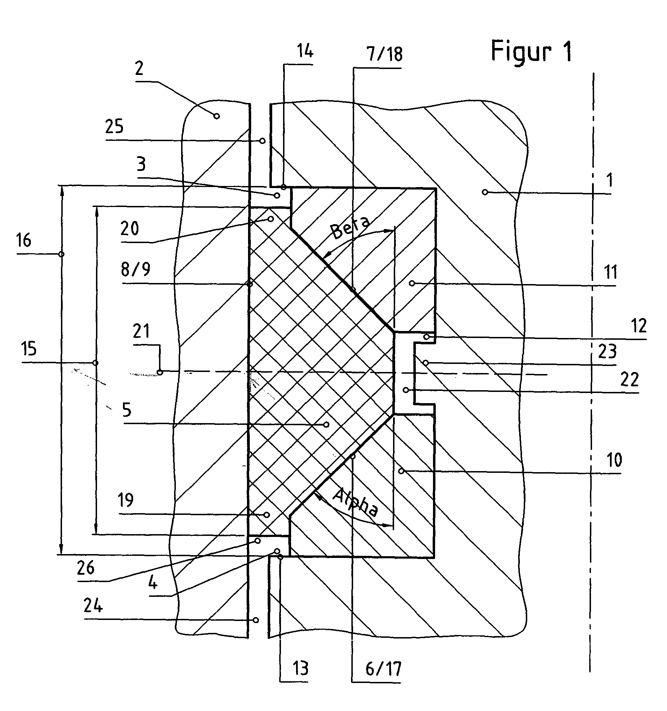

In Figur 1 ist ein Ausführungsbeispiel der Dichtungsanordnung während der bestimmungsgemäßen Verwendung gezeigt. Im hier dargestellten Beispiel ist die Dichtungsanordnung nicht-Differenzdruck beaufschlagt; in den gegeneinander abzudichtenden Räumen 24, 25 herrscht ein übereinstimmender Druck.

Das erste Maschinenelement 1 ist durch einen Kolben gebildet, der in einem zweiten Maschinenelement 2, das als Zylinder ausgebildet ist, in axialer Richtung hin- und her bewegbar ist. Im ersten Maschinenelement 1 ist eine in Richtung des zweiten Maschinenelements 2 radial offene Nut 4 angeordnet. Die Nut 4 mit ihrem Nutgrund 12 und den beiden Begrenzungswänden 13, 14 und die abzudichtende Fläche 9 des zweiten Maschinenelement 2 begrenzen den Einbauraum 26 für die Dichtung 3.

Die Dichtung 3 umfaßt das Dichtelement 5, das aus PTFE besteht und im Wesentlichen trapezförmig ausgebildet ist. Außerdem umfaßt die Dichtung 3 die beiden Anpreßelemente 10, 11, die zur Radialebene 21 spiegelbildlich innerhalb der Nut 4 angeordnet sind. Die Anpreßelemente 10, 11 sind als Gleichteile ausgebildet und stützen mittels ihrer Anpreßflächen 17, 18 die Flankenflächen 6, 7 des Dichtelements 5. Die Anpreßelemente 10, 11 bestehen aus einem gummielastischen inkompressiblen Werkstoff.

Von entscheidender Wichtigkeit ist, das die Dichtung 3 unter elastischer radialer und elastischer axialer Vorspannung innerhalb der Nut 4/des Einbauraums 26 angeordnet ist und dass die Dichtfläche 8 eine Länge 15 aufweist, die geringer ist als die Länge 16 der Nut 4. Die Dichtungsanordnung ist mit einer Dämpfung der axialen Hin- und Her-Bewegung des Dichtelements 5 versehen, wobei die Anpreßflächen 17, 18 der beiden Anpreßelemente 10, 11 und die Flankenflächen 6, 7 als schiefe Ebene/Keil für das Dichtelement 5 bei dessen axialer Bewegung fungieren.

Zur Begrenzung extremer Auslenkbewegungen des Dichtelements 5 in axialer Richtung innerhalb des Einbauraums 26 sind die stirnseitigen Anschläge 19, 20 vorgesehen, die an die jeweils axial angrenzende Begrenzungswand 13, 14 anlegbar sind.

Die Winkel α und β betragen im hier gezeigten Ausführungsbeispiel rund 45 °, wobei durch die Winkel α und β die Vorspannkraft der Dichtung 3 in axialer und radialer Richtung bestimmen. Durch die Gestalt der Anpreßelemente 10, 11 und des Dichtelements 5, ist dieses innerhalb der Nut 4/des Einbauraums 26 in axialer Richtung zentriert. Die elastische Vorspannung der Dichtung 3 in radialer und axialer Richtung wird durch die Verpreßung der Dichtfläche 8 mit der abzudichtenden Fläche 9 und durch die Verpreßung der Anpreßflächen 17, 18 mit den Flankenflächen 6, 7, erreicht.

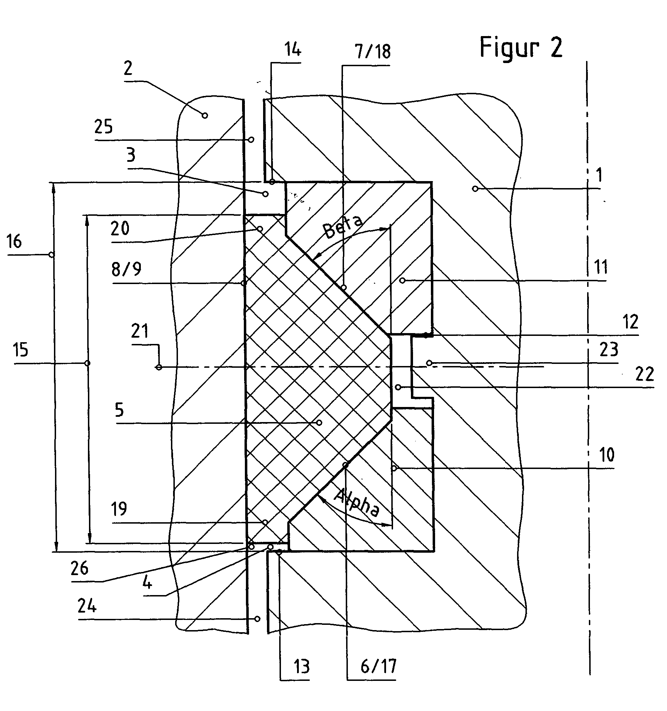

In Figur 2 ist das Ausführungsbeispiel aus Figur 1 gezeigt, wobei ein Druckimpuls vom abzudichtenden Raum 25 auf das Dichtelement 5 wirkt. Das Dichtelement 5 wird axial in Richtung des Raums 24, das heißt in Richtung des Raums 24 mit dem vergleichsweise geringeren Druck bewegt. Mit zunehmender Bewegung des Dichtelements 5 in Richtung des Raums 24 wird die Kraftwirkung zwischen der Flankenfläche 6 und der Anpreßfläche 18 des Anpreßelements 11 erhöht. Durch die gummielastischen Eigenschaften des Werkstoffs, aus dem das Anpreßelement 11 besteht, werden die aus der Bewegung resultierenden Schwingungen des Dichtelements 5 in Richtung des Raums 24 umso stärker gedämpft, je weiter sich das Dichtelement 5 in Richtung des Raums 24 bewegt.

Die Anschlagpuffer 19, 20 sind den jeweils angrenzenden Begrenzungswänden 13, 14 während der bestimmungsgemäßen Verwendung zumindest mit einem sehr geringen axialen Abstand benachbart zugeordnet. Die Anschlagpuffer 19, 20 berühren die entsprechenden Begrenzungswände 13, 14 nur in normalerweise nicht vorkommenden Extremfällen.

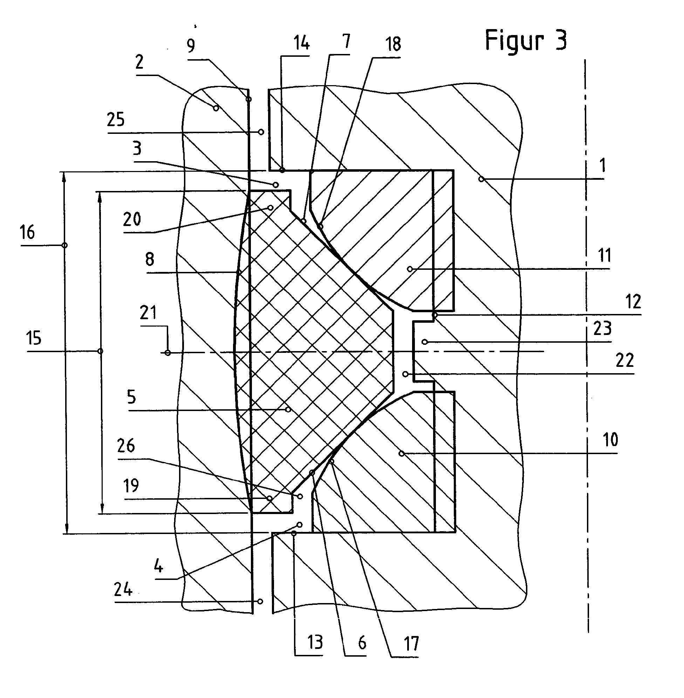

In Figur 3 ist die Dichtungsanordnung aus den Figuren 1 und 2 mit den Bestandteilen der Dichtung 3 gezeigt, wobei die Bestandteile der Dichtung 3 in ihrer herstellungsbedingten Form gezeigt sind. Die Dichtfläche 8 des Dichtelements 5 ist in Richtung der abzudichtenden Fläche 9 des zweiten Maschinenelements 2 ballig ausgebildet. Außerdem sind die Anpreßflächen 17, 18 der beiden Anpreßelemente 10, 11 in Richtung der Flankenflächen 6, 7 ebenfalls ballig ausgeführt. Die Amessungen des Dichtelements 5 und der Anpreßelemente 10, 11, die zusammen die Dichtung 3 bilden, sind so bemessen, dass die Dichtung 3 im eingebauten Zustand, wie in Figur 1 dargestellt, unter elastischer radialer und elastischer axialer Vorspannung innerhalb der Nut 4/des Einbauraums 26 angeordnet ist.

## Patentansprüche

1. Dichtungsanordnung zur Abdichtung von zwei translatorisch zueinander bewegbaren Maschinenelementen (1, 2), umfassend eine Dichtung (3), die in einer Nut (4) des ersten Maschinenelements (1, 2) angeordnet ist, wobei die Nut (4) radial in Richtung des zweiten Maschinenelements (2, 1) offen ist, wobei die Dichtung (3) unter elastischer radialer und elastischer axialer Vorspannung innerhalb der Nut (4) angeordnet ist und ein Dichtelement (5) umfaßt, das, in Längsschnitt betrachtet, im Wesentlichen trapezförmig ausgebildet ist, mit zwei Flankenflächen (6, 7) und einer Dichtfläche (8), wobei die Dichtfläche (8) die abzudichtende Fläche (9) des zweiten Maschinenelements (2, 1) unter elastischer radialer Vorspannung dichtend berührt, sowie zwei Anpreßelemente (10, 11), die jeweils eine der Flankenflächen (6, 7), den Nutgrund (12) der Nut (4) und die der jeweiligen Flankenfläche (6, 7) zugewandte Begrenzungswand (13, 14) der Nut (4) anliegend berühren, wobei die Dichtfläche (8) eine axiale Länge (15) aufweist, die geringer ist als axiale die Länge (16) der Nut (4).

2. Dichtungsanordnung nach Anspruch 1, **dadurch gekennzeichnet, dass** das Dichtelement (5) aus einem polymeren Werkstoff besteht.

3. Dichtungsanordnung nach einem der Ansprüche 1 oder 2, **dadurch gekennzeichnet, dass** die Anpreßelemente (10, 11) aus einem inkompressiblen gummielastischen Werkstoff bestehen.

4. Dichtungsanordnung nach einem der Ansprüche 1 bis 3, **dadurch gekennzeichnet, dass** die Anpreßelemente (10, 11) die Flankenflächen (6, 7) mit Anpreßflächen (17, 18) anliegend berühren.

5. Dichtungsanordnung nach einem der Ansprüche 1 bis 4, **dadurch gekennzeichnet, dass** das Dichtelement (5) axial beiderseits stirnseitige Anschlagpuffer (19, 20) aufweist, die der jeweils axial benachbart angrenzenden Begrenzungswand (13, 14) mit axialem Abstand benachbart zugeordnet und zur Begrenzung extremer axialer Auslenkbewegungen des Dichtelements (5) an die jeweilige Begrenzungswand (13, 14) anlegbar sind.

6. Dichtungsanordnung nach einem der Ansprüche 1 bis 5, **dadurch gekennzeichnet, dass** das Dichtelement (5), im Längsschnitt betrachtet, zu einer axial mittig in der Nut (4) errichteten, gedachten Radialebene (21) symmetrisch ausgebildet ist.

7. Dichtungsanordnung nach einem der Ansprüche 1 bis 6, **dadurch gekennzeichnet, dass** die Anpreßelemente (10, 11), im Längsschnitt betrachtet, im Wesentlichen rotationssymmetrisch ausgebildet sind.

8. Dichtungsanordnung nach einem der Ansprüche 1 bis 7, **dadurch gekennzeichnet, dass** die Anpreßelemente (10, 11), im Längsschnitt betrachtet, im Wesentlichen dreieckförmig ausgebildet sind.

9. Dichtungsanordnung nach einem der Ansprüche 1 bis 8, **dadurch gekennzeichnet, dass** die Anpreßelemente (10, 11) übereinstimmend ausgebildet und symmetrisch zur Radialebene (21) angeordnet sind.

10. Dichtungsanordnung nach einem der Ansprüche 1 bis 9, **dadurch gekennzeichnet, dass** die Anpreßelemente (10, 11) einander mit axialem Abstand benachbart zugeordnet sind und dass in dem durch den Abstand gebildeten Spalt (22) ein sich in radialer Richtung erstreckender Positionierungsvorsprung (23) für die Anpreßelemente (10, 11) angeordnet ist.

11. Dichtungsanordnung nach einem der Ansprüche 1 bis 10, **dadurch gekennzeichnet, dass** die Flankenflächen (6, 7) und/oder die Anpreßflächen (17, 18) und/oder die Dichtfläche (8), im Längsschnitt betrachtet, im Wesentlichen ballig ausgebildet sind.

12. Dichtungsanordnung nach einem der Ansprüche 1 bis 11, **dadurch gekennzeichnet, dass** die Flankenflächen (6, 7) und die entsprechenden Anpreßflächen (17, 18) mit dem Nutgrund (12) jeweils einen Winkel (α, β) zwischen 10 ° und 80 ° einschließen.

13. Dichtungsanordnung nach Anspruch 12, **dadurch gekennzeichnet, dass** die Winkel (α, β) jeweils 30 ° bis 60 ° betragen.

14. Dichtungsanordnung nach einem der Ansprüche 12 oder 13, **dadurch gekennzeichnet, dass** die Winkel (α, β) gleich sind.
